# FASCICULE DE BREVET EUROPEEN

(11) **EP 0 759 355 B1**
(45) Date de publication et mention de la délivrance du brevet: **14.11.2001**
(21) Numéro de dépôt: 96112082.1
(22) Date de dépôt: 26.07.1996
(51) Int. Cl.: B29D 30/00, B29D 30/06

(54) **Manipulation de pneumatiques vulcanisés, en particulier refroidissement de ceux-ci**
Behandlung, insbesondere Abkühlung von vulkanisierten Reifen
Treatment of vulcanized tyres, in particular cooling thereof

(30) Priorité: 08.08.1995 FR 9509705
(43) Date de publication de la demande: 26.02.1997
(73) Titulaire: SEDEPRO, F-75015 Paris (FR)
(72) Inventeur: Cleveland, Daniel R., Simpsonville, S.C. 29681 (US)
(74) Mandataire: Bauvir, Jacques

(56) Documents cités:
- EP-A- 0 154 612
- FR-A- 1 460 639
- GB-A- 845 637
- GB-A- 2 219 285
- US-A- 3 772 756
- US-A- 3 952 892

## Description

La présente invention concerne en général la manipulation de pneus vulcanisés. Elle concerne aussi les opérations effectuées sur le pneumatique après la vulcanisation.

L'un des problèmes rencontrés juste après la vulcanisation consiste à refroidir le pneumatique jusqu'à une température qui autorise ou facilite les manipulations ultérieures. En général, au sortir de la vulcanisation, la réaction de vulcanisation ne s'est pas déroulée complètement. A ce stade, le niveau final des propriétés de résistance mécanique du pneumatique n'est pas encore atteint. Il est cependant nécessaire de n'immobiliser l'équipement de vulcanisation que le temps minimum nécessaire, afin d'en augmenter la productivité.

Dès lors, au moment où le pneumatique est démoulé, il convient de le manipuler avec certaines précautions. La demande de brevet US 5,204,049 illustre un dispositif de refroidissement d'un pneumatique dans lequel on introduit un pneumatique juste après qu'il a été démoulé, lorsqu'il est encore sensiblement à la température de vulcanisation.

Après vulcanisation, le pneumatique subit le plus souvent des contrôles, par exemples sur des machines d'uniformité, et il doit de toute façon être éloigné de l'endroit où il a été vulcanisé. On utilise souvent des tapis de convoyage sur lesquels le pneumatique circule à l'horizontale. Autrement dit, l'axe de rotation du pneumatique est parallèle à l'orientation des forces de gravité. Au cours de ces manipulations, se pose le problème d'éviter de trop solliciter mécaniquement le pneumatique, pour éviter de le dégrader, notamment parce qu'il ne jouit pas encore du niveau maximal de ses propriétés de résistance mécanique.

La présente invention propose un dispositif de manipulation des pneumatiques qui minimise les sollicitations statiques, de façon à ne pas causer de défauts d'uniformité dus à la manipulation. Les manipulations postérieures à la vulcanisation doivent être faites avec suffisamment de précaution pour ne pas annihiler tout l'effort fait sur l'outil de fabrication afin de produire des pneumatiques aussi bons que possible.

Un autre but de l'invention est d'accélérer la vitesse de refroidissement des pneumatiques en sortie de vulcanisation, afin qu'ils jouissent aussi vite que possible de propriétés mécaniques suffisantes pour supporter sans dommage les manipulations ultérieures.

Un autre but de l'invention est de proposer des moyens de manipulation qui permettent d'introduire des pneumatiques dans une file d'attente, à un poste fixe, et de retirer les pneumatiques de manière séquentielle hors de cette file d'attente à un autre poste fixe. Un autre but de l'invention consiste à procurer de tels moyens de manipulation de pneumatiques qui se prêtent à la réalisation d'un poste de refroidissement.

Selon l'invention, le dispositif de manipulation de pneus vulcanisés comporte :
- un bâti comportant une base destinée à être rendue solidaire du sol, définissant l'orientation horizontale ;
- deux arbres montés rotatifs sur ledit bâti, sensiblement parallèlement entre eux et sensiblement parallèlement à l'horizontale, à une distance l'un de l'autre inférieure au diamètre extérieur des pneus à manipuler ;
- des moyens pour mettre en rotation au moins l'un des deux arbres ;
de telle sorte que, lorsqu'un pneumatique est déposé sur lesdits arbres en disposant l'axe de rotation dudit pneumatique sensiblement parallèlement à l'axe desdits arbres, lesdits moyens pour mettre en rotation étant activés, ledit pneumatique est soumis à une force gyroscopique et reste en équilibre.

L'invention sera parfaitement comprise grâce à la consultation de la description suivante, illustrant à l'aide des figures jointes et de façon non limitative, un exemple de réalisation concret permettant de saisir tous les avantages que l'on peut en escompter.

La figure 1 est une vue en élévation du dispositif de manipulation selon l'invention.

La figure 2 est une vue en plan du même dispositif.

La figure 3 est une vue selon la flèche F de la figure 1.

La figure 4 est un agrandissement de la zone A de la figure 2.

La figure 5 est une vue selon la flèche G de la figure 1.

La figure 6 est un agrandissement de la zone B de la figure 2.

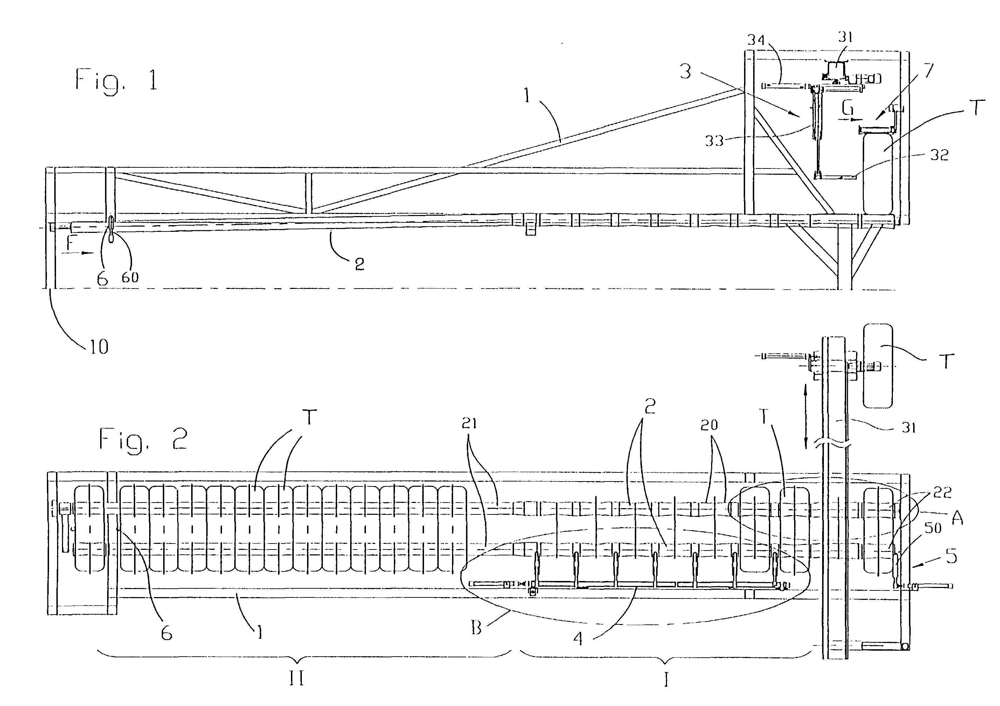

A la figure 1, on aperçoit un bâti 1 supportant deux arbres sur lesquels le pneumatique repose. Les arbres 2 sont montés rotatifs et parallèles entre eux. L'un d'eux est motorisé ou les deux le sont en synchronisme. Le long d'une première partie I de leur longueur, on voit qu'ils comportent des portées tronconiques 20. Ces portées tronconiques 20 sont disposées par groupes de deux portées inclinées les unes vers les autres, les groupes de deux étant séparés par une portée cylindrique. Ces groupes de portées tronconiques 20 sont disposés, sur chacun des arbres 2, en regard l'un de l'autre. Un groupe définit, sur l'arbre 2 considéré, un logement "en V" à l'intérieur duquel un pneumatique peut se centrer. Dans une seconde partie II de leur longueur, la surface extérieure 21 des arbres 2 est cylindrique et régulière.

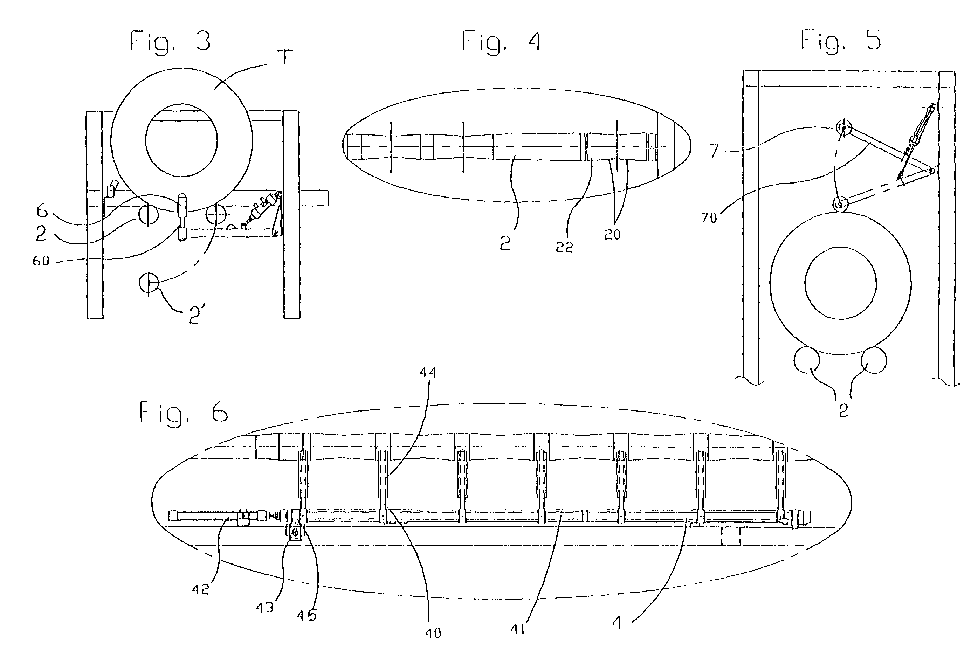

Du côté droit du dispositif, sont installés deux rouleaux 22 dits de réalignement, montés à rotation libre par rapport aux arbres 2. Ces rouleaux de réalignement 22 sont disposés en vis à vis, de façon adjacente à l'ensemble des groupes de portées tronconiques 20, du côté dudit ensemble opposé au côté où se trouve la surface cylindrique 21. Chacun des rouleaux de réalignement 22 est coaxial avec l'arbre 2 auquel il est adjacent. La figure 4 montre en détail comment cette partie de chaque arbre 2 est agencée. Les arbres 2 comportent chacun une portée de diamètre sensiblement réduit, sur laquelle un rouleau de réalignement 22 est monté concentriquement. Ces rouleaux de réalignement 22 comportent eux aussi des portées tronconiques 20 disposées comme expliqué précédemment.

Il est suffisant que seul l'un de ces rouleaux de réalignement 22 soit motorisé. La rotation de celui-ci peut ainsi être commandée indépendamment de la rotation des arbres 2. Les rouleaux de réalignement sont tous les deux équipés d'un système de freinage non représenté. En variante, il est également possible de motoriser les deux rouleaux de réalignement en synchronisme.

Un rouleau dit d'applique 7 (voir figure 5) est monté en porte-à-faux sur un bras 70 articulé sur le bâti 1. Ces organes sont agencés pour que le rouleau d'applique 7 soit disposé en regard et par dessus les rouleaux de réalignement 22, quelle que soit la position du bras articulé 70.

Comme on le voit à la figure 1, la seconde partie II des arbres 2 est légèrement inclinée par rapport au bâti 1. La base 10 du bâti 1 est destinée à être montée directement sur le sol ou parallèlement à l'horizontale. Il en résulte que les arbres 2 sont disposés en légère pente descendante lorsque l'on regarde la figure 1 de droite vers la gauche. Dès lors, dans la seconde partie II, qui se trouve être adjacente à la première partie I, l'axe desdits arbres 2 est légèrement incliné par rapport à l'horizontale.

Revenons plus particulièrement à la figure 6. On voit que le dispositif comporte un organe appelé peigne 4, constituée d'un ensemble de tiges 40. Chaque tige 40 est sensiblement contenue dans un plan perpendiculaire auxdits arbres 2. Chaque tige peut être déplacée par rapport au bâti 1, parallèlement par rapport auxdits arbres 2. A cette fin, lesdites tiges sont montées sur un axe 41, lui-même monté sur le bâti 1. Chaque tige 40 supporte un petit rouleau 44 monté à rotation libre sur celle-ci. L'axe 41 peut être déplacé dans le sens de sa longueur par un vérin 42, et peut être tourné sur lui-même par un vérin 43 actionnant un maneton 45. Le peigne 4 définit, avec les logements matérialisés par les portées tronconiques 20 sur les arbres 2, six cellules à l'intérieur desquelles on peut loger un seul pneumatique T. On peut ainsi disposer jusqu'à six pneumatiques simultanément, ceux-ci restant bien écartés les uns des autres, afin de constituer un dispositif de refroidissement des pneumatiques très efficace.

Les tiges 40 constituent ainsi un moyen de délimitation, lié au bâti, définissant par dessus lesdits arbres 2 et dans la première partie I de ceux-ci, au moins une cellule capable de contenir un pneumatique, et de préférence un seul dans le cas où l'on utilise ladite cellule comme cellule de refroidissement. Les tiges 40 sont disposées de part et d'autre de ladite cellule et peuvent comporter un rouleau 44.

Sur ce principe, différentes réalisations de dispositifs, notamment de refroidissement, sont possibles. Le dispositif peut ne comporter qu'une seule cellule. Dans ce cas, les tiges seront en général fixes. Ou bien le dispositif comporte au moins deux cellules chacune capable de contenir un seul pneumatique, et comporte des moyens de déplacement simultané des moyens de délimitation, chaque arbre comportant dans ce cas au moins deux groupes de deux portées tronconiques adjacentes, lesdites portées étant inclinées l'une vers l'autre, les groupes de chacun des arbres étant disposés en regard l'un de l'autre, de façon à définir un logement recevant un pneumatique, ledit logement étant, pour une position au moins desdits moyens de délimitation, situé sensiblement au centre de chaque cellule.

A la figure 1, on aperçoit également une potence 3 de chargement disposée sur le côté droit du dispositif Cette potence peut être déplacée à l'horizontale le long d'un rail 31, monté sensiblement perpendiculairement à l'orientation générale des arbres 2, et en hauteur par rapport à ceux-ci. La potence 3 comporte une fourche 32 qui peut, grâce à des vérins (vérin vertical 33 et vérin horizontal 34 visibles à la figure 1), être insérée à l'intérieur d'un pneumatique présenté verticalement en regard de la potence 3.

A l'extrémité droite du dispositif, on voit encore un bras de poussée 5 comportant un rouleau rotatif 50 similaire aux rouleaux équipant les tiges 40.

A l'extrémité gauche du dispositif, on voit un organe de blocage constitué par un rouleau 6 monté sur un axe 60 (voir aussi figure 3). L'axe 60 peut être escamoté ou au contraire relevé de façon à ce que le rouleau 6 fasse protubérance par rapport au niveau des arbres 2. Au delà du rouleau 6 et vers la gauche à la figure 1, le dispositif comporte une cellule de déchargement. Dans cette cellule, une partie 2' de l'arbre est indépendante du reste de l'arbre et peut être escamotée comme montré à la figure 3, afin de laisser un passage suffisant pour le pneumatique.

Le fonctionnement du dispositif est le suivant. La potence de chargement 3 saisit un pneumatique en engageant la fourche 32 à l'intérieur des bourrelets du pneumatique T. La potence 3 est animée de tous les mouvements nécessaires afin de pouvoir translater le pneumatique T et le déposer sur les rouleaux de réalignement 22. Au départ, les rouleaux de réalignement 22 sont immobiles. Le pneumatique T est déposé sur ceux-ci par la potence 3. Le rouleau d'applique 4 descend et se dépose sur la bande de roulement du pneumatique. Le pneumatique est donc fermement maintenu entre trois points : chacun des deux rouleaux de réalignement et le rouleau d'applique supérieur. La potence 3 de chargement est évacuée.

Le pneumatique est ensuite mis en rotation ; cette rotation provoque un réalignement automatique du pneumatique grâce à l'action des portées tronconiques 20 présentes sur les rouleaux de réalignement 22 et sur le rouleau d'applique 7. Le réalignement signifie que l'axe de rotation du pneumatique va se disposer et se stabiliser selon une orientation parallèle à l'axe de rotation des arbres 2.

A ce poste, il est possible de procéder à une inspection du pneumatique, par exemple visuelle, ou bien il est possible de projeter sur celui-ci un produit quelconque soit à la surface intérieure ou à la surface extérieure de celui-ci.

La vitesse de rotation du pneumatique est augmentée progressivement en agissant sur la vitesse de rotation de celui des rouleaux de réalignement 22 qui est pourvu d'une motorisation. Lorsque les vitesses des rouleaux de réalignement 22 et de l'arbre 2 sont sensiblement équivalentes, le pneumatique peut être transféré latéralement sur les arbres 2. Ce mécanisme fonctionne à la manière d'un embrayage pour amener le pneumatique progressivement à une vitesse de rotation compatible avec celle des arbres 2.

Expérimentalement, on a constaté que le réalignement s'effectue en quelques tours du pneumatique seulement. La vitesse de rotation du pneumatique est élevée jusqu'à un niveau suffisant pour produire une petite force gyroscopique qui va aider à stabiliser le pneumatique en position verticale. Le rouleau d'applique 7 est escamoté, et le pneumatique reste stable en rotation sur les rouleaux de réalignement 22. De préférence, ledit arbre rotatif est entraîné au moins à une vitesse finale stabilisée (après la phase d'accélération) telle que le ou les pneumatiques tournent autour de leur propre axe de rotation à une vitesse de 30 tours par minute.

L'invention propose aussi un procédé de refroidissement comprenant les étapes suivantes :
- utiliser deux arbres cylindriques rotatifs, sensiblement parallèles entre eux, disposés à une distance l'un de l'autre inférieure au diamètre extérieur des pneus à manipuler, l'axe desdits arbres étant disposé sensiblement perpendiculairement à la direction de la gravitation ;
- mettre en rotation au moins l'un des deux arbres cylindriques et déposer au moins un pneumatique, à une température proche de la température de vulcanisation, sur lesdits arbres en disposant l'axe de rotation dudit pneumatique sensiblement parallèlement à l'axe desdits arbres ;
de sorte que la rotation de l'arbre provoque la mise en rotation du pneumatique et l'apparition d'un effet gyroscopique suffisant pour maintenir le pneu en équilibre, ainsi qu'un échange thermique par convection forcée.

C'est pour cela que chaque pneumatique est transféré vers les cellules de refroidissement de la première partie I. Le bras de poussée 5 entre en contact avec le flanc du pneumatique pour pousser celui-ci vers la première des cellules de refroidissement. Grâce à l'effet gyroscopique, le pneumatique reste debout, en rotation sur les arbres 2.

Pendant la phase de refroidissement, les pneumatiques restent maintenus bien écartés les uns des autres par les tiges 41. Cela permet un bon échange thermique par convection forcée sur toute la surface extérieure du pneumatique. Le refroidissement est lui même d'autant plus rapide que la vitesse relative entre le pneumatique et l'air ambiant est importante.

Par la suite, chaque pneumatique introduit par le côté droit du dispositif de manipulation peut être déplacé latéralement de cellule en cellule en appuyant latéralement sur son flanc. Grâce à l'effet gyroscopique celui-ci n'a pas tendance à se coucher sur les arbres 2.

Ledit peigne non seulement matérialise les cellules mais surtout assure la translation des pneumatiques par le fait que toutes les tiges peuvent être déplacées ensemble en utilisant une combinaison des mouvements suivants :
- un premier mouvement parallèle auxdits arbres,
- un mouvement d'éloignement ou de rapprochement par rapport auxdits arbres. Le fonctionnement du peigne est le suivant. La rotation de l'axe 41 provoque une levée des tiges 40 (éloignement par rapport auxdits arbres). Le déplacement de l'axe 41 permet à toutes les tiges 40 de se décaler d'un rang par rapport au pneumatique en rotation sur les arbres 2. Ensuite, une nouvelle rotation inverse de l'axe 41 permet aux tiges 40 de s'abaisser à nouveau entre les pneumatiques (voir figure 6). Finalement, un retour de l'axe 41 à sa positon initiale provoque une poussée par chacune des tiges 40 sur le flanc du pneumatique qui se trouve dans la cellule de refroidissement. Les pneumatiques sont poussés progressivement vers la cellule adjacente. Le déplacement des tiges 40 forcent les pneumatiques à s'élever hors du puits de potentiel formé par les portées tronconiques 20 aménagées sur les arbres 2. Le pneumatique est ainsi poussé vers la cellule suivante. Le pneumatique qui se trouvait déjà dans la dernière des cellules de refroidissement est, quant à lui poussé sur la seconde partie des arbres 2.

On a vu que celle-ci est légèrement inclinée par rapport à la direction horizontale. Par exemple, l'axe des arbres 2 forme un angle compris entre 0.2° et 2° par rapport à l'horizontale. Dès lors, la force de gravité tend à déplacer chacun des pneumatiques doucement vers la partie gauche, c'est-à-dire vers l'extrémité du chemin défini par les deux arbres 2.

Les pneumatiques déjà fortement refroidis peuvent s'accumuler à concurrence de l'espace disponible sur les arbres en rotation 2. Chacun des pneumatiques chemine spontanément vers la sortie du dispositif de manipulation. Le pneumatique de tête est maintenu à une position correcte pour le déchargement par le rouleau de blocage 6 d'extrémité. Au fur et à mesure des besoins, par une commande manuelle ou automatique, ce rouleau de blocage 6 est escamoté pour laisser passer le pneumatique de tête jusqu'à la cellule de déchargement. Ensuite, la partie 2' de l'arbre est escamotée à la demande pour laisser passer le pneumatique.

En résumé, l'invention propose de maintenir des pneumatiques en position verticale, pour différentes manipulations ou pour se regrouper à une station d'attente. Afin de permettre cela, l'invention propose de mettre en rotation le pneumatique. Grâce à cette rotation, on développe une force gyroscopique suffisante pour que le pneumatique reste spontanément en position verticale même si celui-ci subit des poussées latérales sur son flanc. On peut exploiter cette propriété à la fois pour laisser pendant un certain temps les pneumatiques en position d'attente par exemple, pendant une opération de refroidissement juste après cuisson, ou alors pour que les pneumatiques se déplacent naturellement sur un chemin de guidage constitué par deux arbres en rotation, entre une position d'entrée et une position de sortie.

L'avantage qu'il y a à procéder à une opération de refroidissement de cette sorte est que la rotation du pneumatique confère un refroidissement non seulement très efficace mais aussi très homogène, contrairement à ce qui se produirait si le pneumatique était simplement disposé sur une table. Si le pneumatique est disposé sur une table à la verticale, sans mise en rotation, il y a risque de non homogénéité circonférentielle. Si le pneumatique est disposé sur une table à l'horizontale, il y risque de défaut de symétrie entre un flanc et l'autre du pneumatique.

Enfin, lorsque les pneumatiques cheminent naturellement le long des arbres 2 comme cela a été expliqué, ils ne subissent aucun choc sur leur bande de roulement, choc développant des efforts orientés sensiblement radialement et donc le pneumatique risque de conserver la trace. L'invention permet ainsi de réaliser des zones de stockage tampon entre différentes opérations à effectuer sur le pneumatique après cuisson. Elles se prêtent à réaliser une machine extrêmement compacte en dimension.

## Revendications

1. Dispositif de manipulation de pneus vulcanisés, comportant :
- un bâti (1) comportant une base destinée à être rendue solidaire du sol, définissant l'orientation horizontale ;
- deux arbres (2) montés rotatifs sur ledit bâti, sensiblement parallèlement entre eux et sensiblement parallèlement à l'horizontale, à une distance l'un de l'autre inférieure au diamètre extérieur des pneus (T) à manipuler ;
- des moyens pour mettre en rotation au moins l'un des deux arbres ;
de telle sorte que, lorsqu'un pneumatique est déposé sur lesdits arbres en disposant l'axe de rotation dudit pneumatique sensiblement parallèlement à l'axe desdits arbres, lesdits moyens pour mettre en rotation étant activés, ledit pneumatique est soumis à une force gyroscopique et reste en équilibre.

2. Dispositif selon la revendication 1, dans lequel chaque arbre comporte une première partie (I) comportant au moins un groupe de deux portées tronconiques (20) adjacentes, inclinées l'une vers l'autre, les groupes de chacun des arbres étant disposés en regard l'un de l'autre, de façon à définir un logement recevant un pneumatique.

3. Dispositif selon la revendication 2, dans lequel chaque arbre comporte une deuxième partie (II) adjacente à la première et dans laquelle l'axe desdits arbres (2) est disposé de façon légèrement inclinée par rapport à l'horizontale.

4. Dispositif selon la revendication 3, dans lequel ledit axe forme un angle compris entre 0.2° et 2° par rapport à l'horizontale.

5. Dispositif selon l'une des revendications 2 à 4, comportant dans ladite première partie (I) des moyens de délimitation liés au bâti de façon à définir par dessus lesdits arbres au moins une cellule capable de contenir un seul pneumatique.

6. Dispositif selon la revendication 5, dans lequel lesdits moyens comprennent essentiellement au moins une tige (40) de part et d'autre de ladite cellule, ladite tige étant sensiblement contenue dans un plan perpendiculaire auxdits arbres (2), chaque tige (40) pouvant être déplacée par rapport au bâti, parallèlement par rapport auxdits arbres (2).

7. Dispositif selon la revendication 1, comportant des moyens de délimitation liés au bâti de façon à définir par dessus lesdits arbres au moins deux cellules chacune capable de contenir un seul pneumatique, et comportant des moyens de déplacement simultané des moyens de délimitation, dans lequel chaque arbre (2) comporte au moins deux groupes de deux portées tronconiques (20) adjacentes, lesdites portées étant inclinées l'une vers l'autre, les groupes de chacun des arbres étant disposés en regard l'un de l'autre, de façon à définir un logement recevant un pneumatique, ledit logement étant, pour une position au moins desdits moyens de délimitation, situé sensiblement au centre de chaque cellule.

8. Dispositif selon la revendication 7, dans lequel lesdits moyens de délimitation comprennent au moins une tige (40) de part et d'autre de chaque cellule, ladite tige étant sensiblement contenue dans un plan perpendiculaire auxdits arbres, chaque tige (40) pouvant être déplacée par rapport au bâti, parallèlement par rapport auxdits arbres (2) pour procurer lesdits moyens de déplacement.

9. Dispositif selon la revendication 8, dans lequel toutes les tiges peuvent être déplacées ensemble en utilisant une combinaison des mouvements suivants :
- un premier mouvement parallèle auxdits arbres,
- un mouvement d'éloignement ou de rapprochement par rapport auxdits arbres.

10. Procédé pour maintenir l'axe de rotation d'un pneu sensiblement perpendiculaire à la direction de la gravitation comprenant les étapes suivantes :
- utiliser deux arbres rotatifs, sensiblement parallèles entre eux et disposés à une distance l'un de l'autre inférieure au diamètre extérieur des pneus à manipuler, l'axe desdits arbres étant disposé sensiblement perpendiculairement à la direction de la gravitation ;
- mettre en rotation au moins l'un des deux arbres ;
- déposer au moins un pneumatique sur lesdits arbres en disposant l'axe de rotation dudit pneumatique sensiblement parallèlement à l'axe desdits arbres ;
de sorte que la rotation de l'arbre provoque la mise en rotation du pneumatique et l'apparition d'un effet gyroscopique suffisant pour maintenir le pneu en équilibre.

11. Procédé selon la revendication 10, dans lequel ledit arbre rotatif est entraîné au moins à une vitesse telle que le ou les pneumatiques tournent autour de leur propre axe de rotation à une vitesse de 30 tours par minute.

12. Procédé de refroidissement d'un pneumatique, comprenant les étapes suivantes :
- utiliser deux arbres cylindriques rotatifs, sensiblement parallèles entre eux et disposés à une distance l'un de l'autre inférieure au diamètre extérieur des pneus à manipuler, l'axe desdits arbres étant disposé sensiblement perpendiculairement à la direction de la gravitation ;
- mettre en rotation au moins l'un des deux arbres cylindriques ;
- déposer au moins un pneumatique, à une température proche de la température de vulcanisation, sur lesdits arbres en disposant l'axe de rotation dudit pneumatique sensiblement parallèlement à l'axe desdits arbres ;
de sorte que la rotation de l'arbre provoque la mise en rotation du pneumatique et l'apparition d'un effet gyroscopique suffisant pour maintenir le pneu en équilibre, ainsi qu'un échange thermique par convection forcée.

## Patentansprüche

1. Vorrichtung zur Handhabung von vulkanisierten Reifen, die aufweist:
- ein Gestell (1), das einen zur festen Verbindung mit dem Boden vorgesehenen Unterbau aufweist und die horizontale Ausrichtung festlegt;
- zwei drehbar an dem Gestell angebrachte Wellen (2), die im wesentlichen zueinander und zur Horizontalen parallel sind und voneinander durch einen Abstand getrennt sind, der kleiner ist als der Außendurchmesser der handzuhabenden Reifen (T);
- eine Antriebseinrichtung zum Drehantrieb mindestens einer der beiden Wellen und die so ausgebildet ist, daß
wenn ein Reifen unter Anordnung seiner Drehachse im wesentlichen parallel zur Achse der Wellen auf die Wellen aufgelegt wird, die Antriebseinrichtung aktiviert und der Reifen einer Kreiselkraft ausgesetzt wird und im Gleichgewicht bleibt.

2. Vorrichtung nach Anspruch 1, wobei jede der Wellen einen ersten Abschnitt (I) mit mindestens einer Gruppe von zwei benachbarten, kegelstumpfförmigen Bereichen (20) aufweist, die zueinander geneigt sind, und die Gruppen jeder der Wellen so zueinander angeordnet sind, daß sie eine Aufnahme für einen Reifen vorgeben.

3. Vorrichtung nach Anspruch 2, wobei jede Welle einen zweiten, an den ersten Abschnitt angrenzenden Abschnitt (II) aufweist, in dem die Achse der Wellen (2) gegenüber der Horizontalen leicht geneigt angeordnet ist.

4. Vorrichtung nach Anspruch 3, wobei die Achse mit der Horizontalen einen Winkel zwischen 0,2 und 2° bildet.

5. Vorrichtung nach einem der Ansprüche 2 bis 4, die im ersten Abschnitt (I) eine mit dem Gestell verbundene Begrenzungseinrichtung aufweist, die oberhalb der Wellen mindestens eine Zelle vorgibt, die einen einzigen Reifen aufnehmen kann.

6. Vorrichtung nach Anspruch 5, wobei die Begrenzungseinrichtung im wesentlichen mindestens eine Stange (40) auf beiden Seiten der Zelle aufweist, die im wesentlichen in einer Ebene senkrecht zu den Wellen (2) liegt, wobei jede Stange (40) in bezug auf das Gestell parallel zu den Wellen (2) verschiebbar ist.

7. Vorrichtung nach Anspruch 1, die eine mit dem Gestell verbundene Begrenzungseinrichtung aufweist, die oberhalb der Wellen mindestens zwei Zellen vorgibt, die jeweils einen einzigen Reifen aufnehmen können, und die eine Verschiebungseinrichtung zur gleichzeitigen Verschiebung der Begrenzungseinrichtung aufweist, wobei jede der Wellen (2) mindestens zwei Gruppen von zwei benachbarten, kegelstumpfförmigen Bereichen (20) aufweist, die zueinander geneigt sind, und die Gruppen jeder der Wellen so zueinander angeordnet sind, daß sie eine Aufnahme für einen Reifen vorgeben, die für mindestens eine Position der Begrenzungseinrichtung im wesentlichen in der Mitte jeder Zelle liegt.

8. Vorrichtung nach Anspruch 7, wobei die Begrenzungseinrichtung mindestens eine Stange (40) auf beiden Seiten jeder Zelle aufweist, die im wesentlichen in einer Ebene senkrecht zu den Wellen liegt, wobei jede Stange (40) in bezug auf das Gestell parallel zu den Wellen (2) verschiebbar ist und so die Verschiebungseinrichtung bildet.

9. Vorrichtung nach Anspruch 8, wobei alle Stangen zusammen unter Anwendung einer Kombination der folgenden Bewegungen verschiebbar sind:
- einer ersten Bewegung parallel zu den Wellen,
- einer Weg- oder Hinbewegung in bezug auf die Wellen.

10. Verfahren zur Beibehaltung der Drehachse eines Reifens im wesentlichen senkrecht zur Richtung der Schwerkraft, das folgende Schritte umfaßt:
- Verwendung von zwei drehbaren Wellen, die im wesentlichen parallel zueinander und in einem Abstand voneinander angeordnet sind, der kleiner ist als der Außendurchmesser der handzuhabenden Reifen, wobei die Achse der Wellen im wesentlichen senkrecht zur Richtung der Schwerkraft angeordnet ist;
- Rotierenlassen mindestens einer der beiden Wellen;
- Auflegen mindestens eines Reifens auf die Wellen unter Ausrichtung seiner Drehachse im wesentlichen parallel zur Achse der Wellen;
wobei so verfahren wird, daß die Drehung der Welle ein Drehen des Reifens und das Auftreten einer Kreiselwirkung bewirkt, die ausreichend ist, um den Reifen im Gleichgewicht zu halten.

11. Verfahren nach Anspruch 10, wobei die drehbare Welle mit mindestens einer solchen Geschwindigkeit angetrieben wird, daß sich der oder die Reifen mit einer Geschwindigkeit von 30 Umdrehungen pro Minute um ihre eigenen Drehachsen drehen.

12. Verfahren zur Abkühlung von Reifen, das folgende Schritte aufweist:
- Verwendung von zwei zylindrischen drehbaren Wellen, die im wesentlichen parallel zueinander und in einem Abstand voneinander angeordnet sind, der kleiner ist als der Außendurchmesser der handzuhabenden Reifen, wobei die Achse der Wellen im wesentlichen senkrecht zur Richtung der Schwerkraft angeordnet ist;
- Rotierenlassen mindestens einer der beiden zylindrischen Wellen ;
- Auflegen mindestens eines Reifens, der eine Temperatur in der Nähe der Vulkanisationstemperatur aufweist, auf die Wellen unter Ausrichtung seiner Drehachse im wesentlichen parallel zur Achse der Wellen;
wobei so verfahren wird, daß die Drehung der Welle ein Drehen des Reifens und das Auftreten einer Kreiselwirkung, die ausreichend ist, um den Reifen im Gleichgewicht zu halten, sowie einen Wärmeaustausch durch erzwungene Konvektion bewirkt.

## Claims

1. A device for the handling of vulcanised tyres, comprising:
-- a frame (1) comprising a base intended to be fastened to the ground, defining the horizontal orientation;
-- two shafts (2) mounted for rotation on said frame, substantially parallel to each other and substantially parallel to the horizontal, at a distance from each other less than the external diameter of the tyres (T) to be handled;
-- means for placing at least one of the two shafts in rotation;
so that, when a tyre is arranged on said shafts with the axis of rotation of said tyre arranged substantially parallel to the axis of said shafts, said means for placing in rotation being activated, said tyre is subjected to a gyroscopic force and remains in equilibrium.

2. A device according to Claim 1, wherein each shaft comprises a first portion (I) comprising at least one group of two adjacent frustoconical bearing surfaces (20) inclined towards each other, the groups of each of the shafts being arranged facing each other so as to define a groove receiving a tyre.

3. A device according to Claim 2, wherein each shaft comprises a second portion (II) adjacent to the first and in which the axis of said shafts (2) is arranged slightly inclined with respect to the horizontal.

4. A device according to Claim 3, wherein said axis forms an angle of between 0.2° and 2° with the horizontal.

5. A device according to one of Claims 2 to 4, comprising in said first portion (I) delimiting means connected to the frame so as to define by said shafts at least one cell capable of containing a single tyre.

6. A device according to Claim 5, wherein said means comprise essentially at least one rod (40) on both sides of said cell, said rod being substantially contained within a plane perpendicular to said shafts (2), each rod (40) being capable of being displaced with respect to the frame in parallel with respect to said shafts (2).

7. A device according to Claim 1, comprising delimiting means connected to the frame so as to define by said shafts at least two cells each capable of containing a single tyre, and comprising means for simultaneous displacement of the delimiting means, in which each shaft (2) comprises at least two groups of two adjacent frustoconical bearing surfaces (20), said surfaces being inclined towards each other, the groups of each of the shafts being arranged facing each other so as to define a groove receiving a tyre, said groove being, for at least one position of said delimiting means, located substantially at the centre of each cell.

8. A device according to Claim 7, wherein said delimiting means comprise at least one rod (40) on each side of each cell, said rod being substantially contained in a plane perpendicular to said shafts, each rod (40) being capable of being displaced with respect to the frame, parallel to said shafts (2) in order to procure said displacement means.

9. A device according to Claim 8, wherein all the rods can be displaced together utilising, in combination, the following movements:
-- a first movement parallel to said shafts;
-- a movement away from or towards said shafts.

10. A process for keeping the axis of rotation of a tyre substantially perpendicular to the direction of the force of gravity, comprising the following steps:
-- the use of two rotary shafts substantially parallel to each other, arranged at a distance from each other less than the external diameter of the tyres to be handled, the axis of said shafts being arranged substantially perpendicular to the direction of gravity;
-- placing at least one of the two shafts in rotation;
-- placing at least one tyre on said shafts, disposing the axis of rotation of said tyre substantially parallel to the axis of said shafts;
so that the rotation of the shaft causes the placing in rotation of the tyre and the appearance of a gyroscopic effect sufficient to maintain the tyre in equilibrium.

11. A process according to Claim 10, in which said rotary shaft is driven at least at a speed such that the tyre or tyres turn around their own axis of rotation at a speed of 30 rpm.

12. A process for cooling a tyre, comprising the following steps:
-- the use of two rotary cylindrical shafts substantially parallel to each other, arranged at a distance from each other less than the external diameter of the tyres to be handled, the axis of said shafts being arranged substantially perpendicular to the direction of gravity;
-- placing at least one of the two cylindrical shafts in rotation;
-- placing at least one tyre, at a temperature close to the vulcanisation temperature, on said shafts, disposing the axis of rotation of said tyre substantially parallel to the axis of said shafts;
so that the rotation of the shaft causes the placing in rotation of the tyre and the appearance of a gyroscopic effect sufficient to maintain the tyre in equilibrium, as well as a heat exchange by forced convection.
